# EUROPÄISCHE PATENTSCHRIFT

(11) **EP 0 511 343 B1**
(45) Veröffentlichungstag und Bekanntmachung des Hinweises auf die Patenterteilung: **27.07.1994**
(21) Anmeldenummer: 91919458.9
(22) Anmeldetag: 12.11.1991
(51) Int. Cl.: G01M 3/18

(54) **VORRICHTUNG ZUM ÜBERWACHEN DER DICHTHEIT VON IM FREIEN UND IM ERDREICH VERLEGTEN ROHREN UND ROHRLEITUNGEN UND BAUWERKEN AUS THERMOPLASTISCHEM KUNSTSTOFF**
DEVICE FOR MONITORING THE FLUIDTIGHTNESS OF PIPES AND STRUCTURES OF THERMOPLASTIC MATERIAL IN THE OPEN AND IN THE GROUND
DISPOSITIF DE SURVEILLANCE DE L'ETANCHEITE DE CANALISATIONS ET DE STRUCTURES EN MATIERES THERMOPLASTIQUES A L'AIR LIBRE ET SOUS TERRE

(30) Priorität: 21.11.1990 DE 4037010
(43) Veröffentlichungstag der Anmeldung: 04.11.1992
(73) Patentinhaber: HENZE GMBH KUNSTSTOFFWERK, D-53823 Troisdorf (DE)
(72) Erfinder: SIMONS, Günter, D-5210 Troisdorf 19 (DE); FRITZEN, Hans-Günther, D-5216 Niederkassel 3 (DE)
(74) Vertreter: Schwarz, Klaus-Jürgen, Dipl.-Ing.
(86) Internationale Anmeldenummer: EP9102137
(87) Internationale Veröffentlichungsnummer: WO9209872

(56) Entgegenhaltungen:
- DE-A- 2 610 263
- Patent Abstracts of Japan, vol. 8, no. 204 (P-301)(1641), 18 September 1984 & JP-A-59 088 634

## Beschreibung

Die Erfindung betrifft eine Vorrichtung zum Überwachen der Dichtheit von im Freien und im Erdreich verlegten Rohren, Rohrleitungen und Bauwerken aus thermoplastischem Kunststoff, wie Transportleitungen, Kanalisationsleitungen, Abwasserleitungen mit zugehörigen Formteilen, Schächten, Stauräumen, Sickerwassersammlern und dergleichen, bei der die Wandung mit mindestens einer sich über den gesamten Umfang und Länge erstreckenden homogenen elektrisch leitenden Schicht umgeben ist, wobei die elektrisch leitende Schicht über Kabel mit einem Pol eines hochohmigen Widerstandsmeßgerätes verbunden ist, dessen anderer Pol an eine sich zu der elektrisch leitenden Schicht parallel erstreckende Gegenelektrode angeschlossen ist.

Die Kontrolle der Dichtheit insbesondere von im Erdreich verlegten Rohren und Rohrleitungen aus Kunststoff, wie Transportleitungen, Kanalisationsleitungen, Abwasserleitungen mit zugehörigen Formteilen und Bauwerken in Trinkwasserschutzzonen und dergleichen, gewinnt aus Gründen des Umweltschutzes zunehmend an Bedeutung.

So macht das Wasserhaushaltsgesetz den Betreibern von Anlagen, die sich mit der Lagerung, dem Abfüllen, dem Transport und der Ableitung von wassergefährdenden Flüssigkeiten befassen, zum Teil sehr strenge Auflagen.

Rohrleitungsteile, Behälter und ähnliche Teile von Produktionsanlagen unterliegen zudem manigfachen Auflagen hinsichtlich einer qualitativ einwandfreien Ausführung.

Da Abwässer aus Industriebereichen, kommunalen Abwassersystemen und Sickerwässer aus Deponien als wassergefährdende Flüssigkeiten gelten, fallen Rohrleitungssysteme mit den zugehörigen Formteilen und Bauwerken in diesen Bereichen ebenfalls unter die betreffenden Schutzvorschriften.

Aus diesen Gründen wird für gefährdete Bereiche, zum Beispiel bei Abwasserleitungen in Trinkwasserschutzzonen schon seit längerer Zeit ein doppelwandiges Rohrsystem vorgeschrieben. Dies erfordert einen hohnen konstruktiven Aufwand und entsprechend teuere Investitionen. Außerdem erhält der Betreiber solcher Systeme in zunehmendem Maße von den zuständigen Behörden Auflagen, die Dichtheit solcher Systeme jederzeit zu gewährleisten und durch bestimmte Nachweise zu belegen. Dies macht eine ständige Kontrolle der Rohrleitungssysteme und Bauwerke auf Leckagen erforderlich, wobei allerdings insbesondere bei Doppelrohrsystemen im Alarmfalle nur schwer festzustellen ist, ob es sich um Leckflüssigkeit an dem Rohrsystem oder um Kondensatflüssigkeit handelt, die sich in dem Ringraum des Doppelrohrsystems angesammelt hat.

Schon allein wegen des hohen konstruktiven Aufwandes sind solche Doppelrohrsysteme im allgemeinen nur wirtschaftlich in geringeren Dimensionen bis zu Nenndurchmessern von etwa 300 bis 400 mm.

Üblicherweise werden für solche im Erdreich verlegten Rohrleitungen aus Kunststoff Wickelrohre aus Polyethylen hoher Dichte (PE-HD), aus PVC (Polyvinylchlorid), PP (Polypropylen) und PVDF (Polyvinylidenfluorid) verwendet, die die Anforderungen der chemischen Beständigkeit für die anfallenden wassergefährdenden Flüssigkeiten erfüllen und sich an ihren Stoßstellen außerdem dicht verschweißen lassen. Bei diesen Wickelrohren aus thermoplastischen Kunststoffen, die auch doppelwandig ausgebildet sein können, gibt es etliche Verfahrensvarianten einer dichten Schweißverbindung. Alle bekannten Systeme lassen sich jedoch nicht mit einfachen Mitteln auf ihre Dichtheit überprüfen und während des späteren Betriebes überwachen.

Das für solche Wickelrohre normalerweise verwendete PE-HD ist ebenso wie die anderen Kunststoffe in seiner Normaleinstellung elektrisch nichtleitend.

Zwar gibt es eine spezielle Kunststofformmasse von Polyolefinen, insbesondere HD- und LDPE, die durch metallische Zusätze elektrisch leitend gemacht worden ist. Hierbei handelt es sich jedoch um eine hochmolekulare Spezialtype mit einem Oberflächenwiderstand von weniger als 10⁹ Ohm. Diese spezielle Formmasse wird zum Beispiel für die Herstellung blasgeformter Behälter für feuergefährliche Füllgüter und als Rohr- und Tafelmaterial für Anwendungen in explosionsgeschützten Bereichen eingesetzt. Dieser Werkstoff ist durch seinen geringen Oberflächenwiderstand elektrisch leitend.

Aus DE-A-2 610 263 ist ein System zur Lecküberwachung unter anderem eines thermoplastischen Kunststoffrohres oder der Wandung eines Kunststoffbehälters bekannt, bei dem das Kunststoffrohr mit einer elektrisch leitenden Schicht aus Metall umgeben ist. Ein Leck an dem Kunststoffrohr oder Behälter wird mittels eines durch das Leck hervorgerufenen Kontaktes zwischen dieser leitenden Schicht und einer zweiten Metallschicht oder Gegenelektrode mit einem Widerstandsmeßgerät ermittelt. Statt des Meßgerätes können auch Kontakte zum Beispiel für eine Meldevorrichtung für ein aufgetretenes Leck oder für ein Relais zum Abschalten der Rohrströmung und einem Schalter verbunden sein.

Bekannt ist ferner eine Vorrichtung zur Anzeige von Feuchtigkeitsdurchbrüchen bei Wänden, insbesondere Behälterwänden (DE-GM 19 26 000), die gekennzeichnet ist durch einen an der Wand zu befestigenden, flächigen, elektrisch leitenden Träger, der auf seiner von der Wand abliegenden Seite mit einem feuchtigkeitsdichten, elektrisch nichtleitenden Belag versehen ist und an dessen einem Ende ein elektrischer Leiter angeschlossen ist, der zu einem an sich bekannten elektrischen Potential- oder Strommeßgerät führt. Bei dieser Vorrichtung kann auch auf der der Wand zugekehrten Seite des Trägers ein elektrisch isolierender Belag angeordnet sein, wobei der flächige Träger ein Maschendrahtgeflecht mit kleiner Maschenweite ist.

Eine derartige Anordnung ist allein schon aufgrund des verwendeten Maschendrahtgeflechtes für eine Überwachung der Dichtigkeit von Rohrleitungen und Bauwerken aus thermoplastischen Kunststoffen nicht geeignet, da sich solche flächigen Träger aus Maschendrahtgeflecht an den Rohrleitungen und Bauwerken aus Kunststoff nicht so gleichmäßig flächendeckend anbringen lassen, daß die geforderte Dichtheit solcher Systeme an allen Stellen lückenlos überwacht werden könnte.

In dem DE-GM 19 31 748 ferner ist ein elektronisches Leckwarnsystem für aus Metall bestehende Heizöltanks, deren Innenwand mit einer Kunststoffschicht versehen ist, beschrieben. Auf der Isolierschicht ist eine elektrisch leitende Schicht aufgetragen, die in mehrere voneinander isolierte Bahnen oder Felder unterteilt ist, und auf die leitende Schicht ist wiederum eine zweite Isolierschicht aufgetragen.

Diese Anordnung gestattet zwar die Erkennung eines Lecks mittels elektrischer Widerstandsmessung, auch wenn die Trennwandung optisch nicht kontrollierbar ist. Hierbei bildet jedoch die Außenwand eines metallischen Öltanks die zu überwachende Trennwandung und die erste Leitschicht. Auf diese ist die erste Isolierschicht aufgebracht. Die erste Isolierschicht braucht keine Dichtfunktion zu übernehmen. In sie sollen beim Undichtwerden des Stahltanks die korrodierenden Flüssigkeiten eindringen, die dann den elektrischen Isolationswiderstand zwischen den beiden Elektroden erniedrigen.

Die zweite Leitschicht ist bei dieser bekannten Anordnung in Segmente aufgeteilt, um die Lage eines etwaigen Lecks am Stahltank orten zu können. Die zweite Isolierschicht dient der Trennung des Öls im Stahltank von der zweiten Leitschicht. Zwischen den Segmenten der zweiten Leitschicht bestehen zwangsläufig Lücken. Liegt die Undichtheit im Bereich einer Lücke, dann läßt sich eine solche Undichtheit nicht erfassen. Dies beeinträchtigt die Funktion erheblich. Außerdem ist aber ein solches Überwachungssystem, das für aus Metall bestehende Heizöltanks vorgesehen ist, als Leckwarnsystem für im Erdreich verlegte Kunststoffrohre nicht geeignet, da bei diesen ein Behälterkörper aus einem elektrisch leitenden Material, der auf Dichtheit überwacht werden soll, wie bei einem Stahltank, nicht vorhanden ist. Außerdem ist eine Isolierschicht, in die beim Undichtwerden Flüssigkeit zwischen den Elektroden eintritt, für Rohrleitungssysteme aus thermoplastischem Kunststoff nicht brauchbar.

Aus der DE 39 24 057 C1 ist zwar weiterhin eine Anordnung zur Überwachung der Flüssigkeitsdichtheit einer Trennwand bekannt mit drei Leitschichten, zwischen denen Dichtschichten angeordnet sind. Um eine lückenlosen Überwachung wenigstens der Dichtschichten und die Ortung eines etwaigen Lecks zu ermöglichen, sind zwei der drei Leitschichten in Segmente unterteilt, die sich überlappen. Die Leitschichten sollen aus elektrisch leitendem Kunstharz bestehen, wobei auch die Dichtschichten Kunstharzschichten sind und die Leitschichten und die Dichtschichten die gleiche chemische Beständigkeit aufweisen sollen.

Hierbei ist allerdings zu berücksichtigen, daß bei dieser bekannten Anordnung die erste Leitschicht auf einem zementgebundenen Untergrund aufgebracht und die dritte Leitschicht durch Platten, Steine oder Estrich abgedeckt ist. Ferner sollen sich die Segmente der zweiten und der dritten Leitschichten überlappen, was allerdings zur Folge hat, daß diese bekannte Anordnung und der Aufbau der Schichten nur mittels Handarbeit an begehbaren Stellen ausgeführt werden kann. Außerdem sind die Werkstoffe, die hierfür Verwendung finden, keine thermoplastischen Kunststoffe, so daß auch diese bekannte Anordnung zur Überwachung der Flüssigkeitsdichtigkeit von Rohrleitungen und Bauwerken aus thermoplastischen Kunststoffen nicht geeignet ist.

Der Erfindung liegt die Aufgabe zugrunde, Rohrleitungen mit den zugehörigen Formteilen und Bauwerken aus thermoplastischem Kunststoff, die für eine Verlegung im Erdreich geeignet sind, so auszubilden, daß ohne Beeinträchtigung der Materialeigenschaften der Kunststoffrohre mittels eines elektrischen Meß- und/oder Signalgerätes eine Kontrolle und ebenso eine laufende Überwachung der Dichtheit derartiger Rohrleitungen und Bauwerke in einfacher und zuverlässiger Weise erfolgen kann.

Diese Aufgabe wird gemäß der Erfindung dadurch gelöst, daß die erste leitende Schicht als leitende Kunststoffschicht ausgebildet ist, wobei der Kunststoff der Schicht die gleiche Beschaffenheit wie der Kunststoff des Rohres aufweist.

Die Ausbildung der elektrisch leitenden Schicht aus demselben thermoplastischen Kunststoff wie die übrige Wandung der Rohrleitungen und Bauwerke, wie insbesondere aus PE-HD, hat den Vorteil, daß diese Schicht die gleiche chemische Beständigkeit und auch die gleichen mechanischen Eigenschaften wie der normale Kunststoff hat, aus dem solche Rohrleitungen, Formteile und Bauwerke bestehen. Aus diesem Grunde wird die leitfähige Schicht bei einer Leckage durch das umgebende den Vorteil, daß diese Schicht die gleiche chemische Beständigkeit und auch die gleichen mechanischen Eigenschaften wie der normale Kunststoff hat, aus dem solche Rohrleitungen, Formteile und Bauwerke bestehen. Aus diesem Grunde wird die leitfähige Schicht bei einer Leckage durch das umgebende Medium nicht nachteilig beeinflußt oder zerstört. Außerdem hat die Wandung trotz der elektrisch leitfähigen Schicht stets eine unveränderte mechanische Festigkeit, und die Messungen werden nicht durch Kondensatwasser nachteilig beeinflußt, da die elektrisch leitende Schicht als homogener Bestandteil vollkommen in die Rohrwandung integriert ist.

Die Leitfähigkeit dieser Schicht kann dadurch erreicht werden, daß dem thermoplastischen Kunststoff feinste Metallpartikel oder dergleichen in geeigneter Menge und Verteilung zugesetzt werden. Die Teile für derartige Rohrsysteme und Bauwerke aus rein thermoplastischem Werkstoff können bis auf das Anbringen der elektrischen Kontakte voll maschinell hergestellt werden, und zwar auch Rohre mit kleinem Innendurchmesser.

Eine besonders genaue örtliche Eingrenzung von Schadstellen kann mittels einer solchen Vorrichtung dadurch erreicht werden, daß die Rohrleitungen und Bauwerke in mehrere, aneinander anschließende, elektrisch gegeneinander isolierte Abschnitte unterteilt sind, von denen jeder einzelne Abschnitt an das Widerstandsmeßgerät angeschlossen ist. Das Widerstandsmeßgerät ist dabei vorteilhaft als optisches oder akustisches Signalgerät ausgebildet.

Die elektrisch leitende Schicht kann je nach dem Einsatzgebiet und Verwendungszweck der betreffenden Rohrleitungen und Bauwerke entweder an der Innenseite, an der Außenseite oder im Querschnittsbereich zwischen Innen- und Außenseite der Wandung der Rohrleitung oder des Bauwerkes ausgebildet sein. Zur Unterteilung in einzelne Abschnitte ist die elektrisch leitende Schicht an mindestens einem stirnseitigen Ende jedes Abschnittes der Rohrleitung oder des Bauwerkes durch eine Isolierschicht abgedeckt, wobei als Gegenelektrode für die elektrisch leitende Schicht eine Erdungsschiene in einem geringen Abstand parallel zu der Rohrleitung oder dem Bauwerk im Erdreich angeordnet ist.

Statt einer solchen Erdungsschiene kann aber an der Wandung der Rohrleitung oder des Bauwerkes parallel zu der damit homogen ausgebildeten elektrisch leitenden Schicht, jedoch gegenüber dieser durch eine Zwischenschicht aus thermoplastischem Kunststoff elektrisch isoliert, wenigstens eine weitere elektrisch leitende Schicht als Gegenelektrode ausgebildet sein.

Ein geeignetes Verfahren zum Herstellen solcher Kunststoffrohre, die im Erdreich verlegt werden, ist das bekannte Wikkelverfahren. Dieses Verfahren erlaubt die Herstellung von Rohren nach DIN 16 961 mit den unterschiedlichsten Abmessungen, wobei für die Ausbildung der Rohrwandung auch mehrere Schichten von Kunststoffen mit unterschiedlichen elektrischen Eigenschaften in Koextrusion schraubenlinienförmig übereinander gewickelt werden können.

Ein für das erfindungsgemäße Leckwarnsystem geeignetes Rohr aus PE-HD kann zum Beispiel eine etwa 4 bis 5 mm dicke erste Wickellage aus elektrisch leitfähigem Kunststoff aufweisen, die auf den Wickelkern der dafür eingesetzten Wickelvorrichtung aufgetragen wird und somit eine durchgehende Innenauskleidung der Rohrleitung bildet. Die nachfolgenden Lagen werden dann beim Wickelvorgang anschließend auf die erste Lage aufgebracht, und zwar unter Berücksichtigung der für den jeweiligen Einsatzzweck benötigten Rohrwandgestaltung. Diese folgenden Lagen können vollwandig oder als an ihren Rändern endlos aneinanderliegende Hohlprofile oder Wickelhohlprofile ausgeführt werden. In einem nächsten Arbeitsgang kann dann wieder eine elektrisch leitende Schicht, wie vorstehend beschrieben, aufgebracht werden, die sich dann wiederum parallel zu der ersten leitenden Schicht erstreckt und bei Bedarf in einem nächsten Arbeitsgang mit einer weiteren Isolierschicht umwickelt werden kann.

Auf diese Weise werden die einzelnen Rohre oder Rohrschüsse rein maschinell ohne jede Handarbeit fertiggestellt und nach dem Wickelvorgang von dem Stahl- bzw. Wickelkern der Wickelvorrichtung entformt. Nach dem Besäumen der Rohre wird an einer Stirnseite jedes Rohrabschnittes, bei Rohren mit Spitzende und Muffe an der Spitzendeseite, die zuletzt gewickelte außenliegende leitfähige Schicht durch eine Isolierschicht abgedeckt, so daß beim stirnseitigen Aneinanderstoßen und Verschweißen der aufeinanderfolgenden Rohrabschnitte die elektrisch leitende Kunststoffschicht jedes einzelnen Rohrschusses von der elektrisch leitenden Schicht des jeweils benachbarten Rohrschusses elektrisch isoliert ist.

Die Rohre werden in dieser Ausführung miteinander verschweißt, wobei auf der elektrisch leitenden Innenseite elektrisch leitendes Schweißgut und auf der Außenseite elektrisch nichtleitendes Schweißgut verwendet wird.

Bei Leckagen, die durch Risse in der Rohrwand oder durch undichte Stellen im Schweißnahtbereich solcher Rohrleitungen und Bauwerke entstehen, kann entweder von innen ein elektrisch leitendes Medium, wie das in der Rohrleitung geführte Wasser, nach außen bzw. ein die Rohrleitung umgebendes elektrisch leitendes Medium, wie zum Beispiel das Grundwasser, von außen nach innen treten.

In beiden Fällen wird durch das elektrisch leitende Medium im Bereich der Leckstelle ein elektrischer Kontakt zwischen der leitfähigen Schicht der Rohrleitungswandung und der Gegenelektrode entstehen.

Diese Leckstelle wird nun dadurch erkannt, daß die leitende Schicht und die Gegenelektrode mittels Kabel mit einem hochohmigen elektrischen Widerstandsmeßgerät oder einem anderen geeigneten elektrischen Signal- oder Überwachungsgerät verbunden sind und im Bereich der Leckage der vorher zwischen den Schichten vorhandene hohe elektrische Widerstand durch die eingetretene Flüssigkeit abgesenkt wird und dementsprechend ein Warnsignal oder eine entsprechende Anzeige an dem Kontroll- oder Überwachungsgerät auslöst.

In der bevorzugten einfachen Ausführungsform können die einzelnen Rohrschüsse einer solchen Kunststoffrohrleitung aber auch nur eine einzige elektrisch leitende Kunststoffschicht aufweisen, die in der Mitte des Rohrwandungsquerschnittes angeordnet ist, wobei sich dann in dichtem Abstand parallel zu der Rohrleitung eine im Erdreich verlegte Erdungsschiene erstreckt, die als Gegenpol zu der elektrisch leitenden Schicht ebenfalls mit dem Meß- oder Überwachungsgerät verbunden ist und beim Auftreten einer Leckstelle in der vorher beschriebenen Weise zu einer Leckanzeige führt. An der Rohrinnenseite ist eine weitere Gegenelektrode angeordnet, die aus einer auf die Rohrinnenwand aufgeschweißten Platte aus elektrisch leitendem Kunststoff besteht und den Kabelanschluß gegen Korrosion schützt.

Bevorzugte Ausführungsbeispiele der Erfindung sind in der Zeichnung schematisch dargestellt. Es zeigen
- Fig. 1: eine perspektivische Darstellung einer im Erdreich verlegten Rohrleitung aus Kunststoff, deren aneinandergeschweißte Rohrschüsse mit einer elektrisch leitenden Schicht ausgebildet und jeweils einzeln über vieladrige Kabel mit einem elektrischen Meß- oder Signalgerät verbunden sind,
- Fig. 2: eine Teildarstellung des Meß- oder Überwachungsgerätes in Verbindung mit einer Steckerschiene zum Überprüfen des elektrischen Widerstandes zwischen der leitenden Schicht an den einzelnen Rohrschüssen der Rohrleitung und einer gemäß Fig. 1 parallel zur Rohrleitung als Gegenelektrode im Erdreich verlegten Erdungsschiene,
- Fig. 3: einen senkrechten Längsschnitt durch eine solche im Erdreich verlegte Abwasser führende Rohrleitung mit einem Kabelanschluß für das Meß- oder Überwachungsgerät und mit einer Stoßstelle zwischen aneinanderstoßenden Rohrschüssen, die im Bereich der elektrisch leitenden Schicht gegeneinander isoliert sind,
- Fig. 4: einen vergrößerten Teilschnitt durch die aneinanderstoßenden Rohrschüsse im Bereich der Schweißverbindung,
- Fig. 5: einen vergrößerten Teilschnitt durch eine abgewandelte Ausführungsform im Bereich der aneinanderstoßenden, miteinander verschweißten Rohrschüsse mit zwei voneinander unabhängigen, sich parallel nebeneinander erstreckenden elektrisch leitenden Schichten,
- Fig. 6: einen weiteren Teilschnitt durch noch eine abgewandelte Ausführungsform von aneinanderstoßenden Rohrschüssen mit drei voneinander unabhängigen, sich parallel nebeneinander erstreckenden elektrisch leitenden Schichten im Bereich der Schweißstelle und
- Fig. 7: einen senkrechten Querschnitt durch eine Kunststoff-Rohrleitung gemäß Fig. 1 und 3.

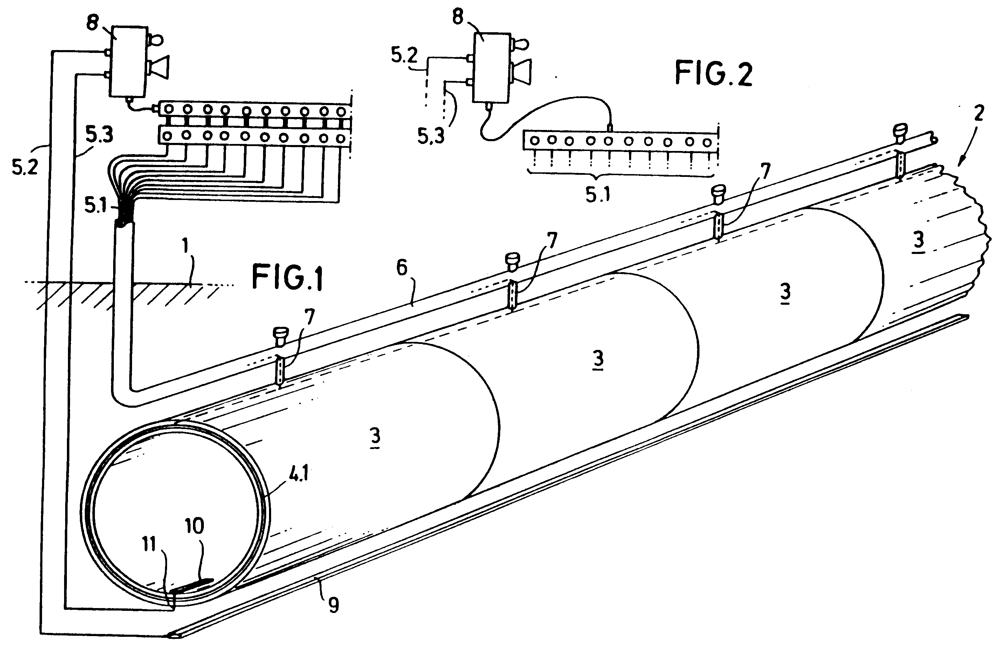

Fig. 1 zeigt eine im Erdreich 1 verlegte Rohrleitung 2 aus thermoplastischem Kunststoff, die aus mehreren stirnseitig aneinanderstoßenden und miteinander verschweißten Rohrschüssen 3 besteht, von denen jeder mit mindestens einer sich über den gesamten Rohrumfang und über die gesamte Länge des betreffenden Rohrschusses erstreckenden Schicht 4.1 aus einem elektrisch leitenden thermoplastischen Kunststoff ausgebildet ist. Dieser Kunststoff kann ebenso wie an der übrigen Wandung der Rohrleitung 2 oder des betreffenden Bauwerkes beispielsweise aus Polyethylen hoher Dichte (PE-HD), aus PVC (Polyvinylchlorid), aus PP (Polypropylen) oder aus PVDF (Polyvinylidenfluorid) bestehen, wobei die elektrische Leitfähigkeit der Schicht 4.1 durch Zusatz feinster Partikel aus elektrisch leitfähigem Material, wie zum Beispiel eine Kupferlegierung oder dergleichen, in gewünschter Weise eingestellt werden kann.

Die elektrisch leitende Schicht 4.1 jedes Rohrschusses 3 ist über ein Bündel von Kabeln 5.1, die in einem Kabelrohr 6 mit Anschlußstutzen 7 zu jedem Rohrschuß 3 verlegt sein können, mit einem Pol eines hochohmigen Widerstandsmeßgerätes 8 verbunden, das als Überwachungsgerät dient und dessen anderer pol über ein Kabel 5.2 an eine sich zu der elektrisch leitenden Schicht 4.1 an den einzelnen Rohrschüssen 3 parallel erstreckende Erdungsschiene 9 angeschlossen ist. Die Erdungsschiene 9 ist im Erdreich 1 in einem geringen Abstand beispielsweise unterhalb der Rohrleitung 2 verlegt und dient als Gegenelektrode für die elektrisch leitende, mit der Rohrwandung homogen ausgebildete Schicht 4.1 an jedem der Rohrschüsse 3.

Zusätzlich zu einer solchen Erdungsschiene 9 kann als weitere Gegenelektrode auch eine Platte 10 aus elektrisch leitendem Kunststoff dienen, die, wie in Fig. 1 gezeigt ist, an der Innenseite der Rohrleitung 2 angeordnet ist und über ein Kabel 5.3 mit dem als Meß- und Überwachungsgerät dienenden hochohmigen Widerstandsmeßgerät 8 verbunden ist. Der Kabelanschluß 11 an der Rohrleitung 2 ist dabei durch die Platte 10 aus leitendem Kunststoff korrosionssicher abgedeckt.

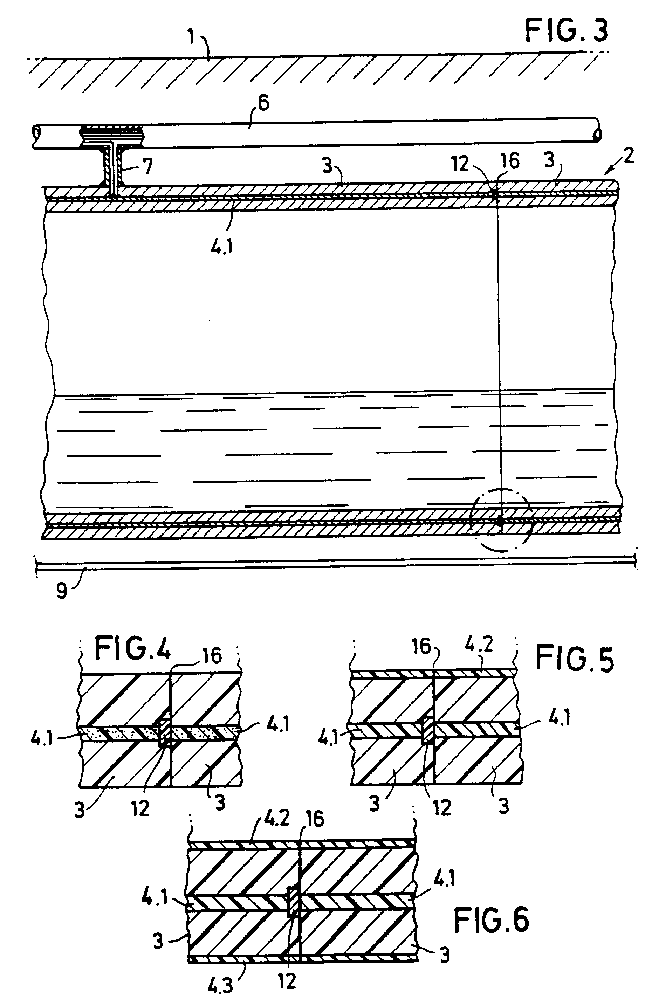

Wie in den Schnittdarstellungen von Fig. 3 bis 6 weiterhin gezeigt ist, kann neben der in Fig. 3 und 4 im Querschnittsbereich zwischen Innen- und Außenseite homogen mit der Rohrleitungswandung ausgebildeten elektrisch leitenden Schicht 4.1 auch noch eine weitere elektrisch leitende Schicht 4.2, 4.3 aus Kunststoff entweder nur an der Rohrinnenseite (Schicht 4.2) oder gegebenenfalls auch zusätzlich noch an der Rohraußenseite (Schicht 4.3) angeordnet und mit dem Widerstandsmeßgerät 8 verbunden sein. In diesem Falle können die zusätzlichen elektrisch leitenden Schichten 4.2, 4.3 als Gegenelektrode oder bzw. Gegenelektroden für die in der Querschnittsmitte angeordnete elektrisch leitende Schicht 4.1 dienen, so daß eine Erdungsschiene entfallen kann.

Um die elektrisch leitende Schicht 4.1, die sich an den einzelnen Rohrschüssen 3 im Querschnittsbereich zwischen der Innen- und der Außenseite der Rohrleitungswandung befindet, zwischen aneinanderstoßenden Rohrschüssen 3 jeweils abschnittweise elektrisch gegeneinander zu isolieren, kann diese elektrisch leitende Kunststoffschicht an mindestens einem stirnseitigen Ende jedes Rohrschusses 3 durch eine Isolierschicht 12 (Fig. 3 bis 6) abgedeckt sein.

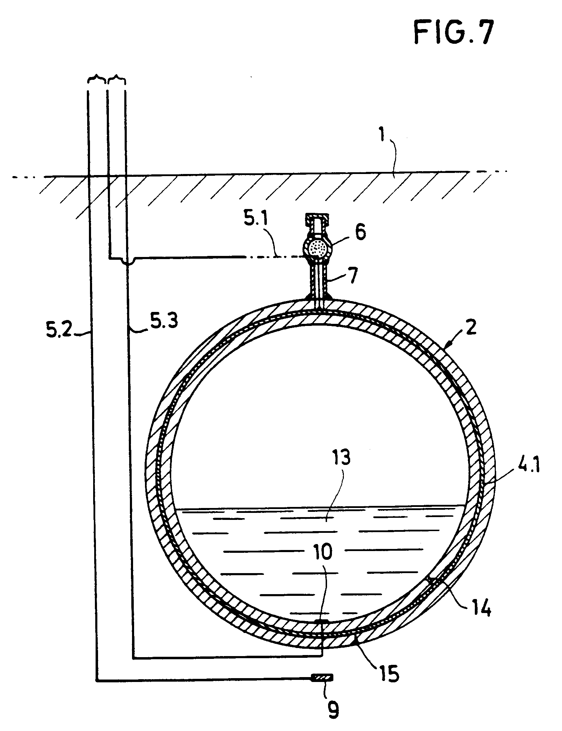

In Fig. 7 ist außerdem eine im Erdreich 1 verlegte, Abwasser 13 führende Rohrleitung 2 aus Kunststoff gezeigt. Tritt an einer solchen Rohrleitung 2 beispielsweise ein Riß 14 an der Rohrinnenseite ein, der bis an die elektrisch leitende Schicht 4.1 in der Rohrwandung reicht, so dringt durch diesen Riß 14 Flüssigkeit vom Rohrinneren bis an die elektrisch leitende Schicht 4.1 vor, so daß der vorher zwischen der elektrisch leitenden Schicht 4.1 und dem Rohrinneren vorhandene elektrische Widerstand abfällt und dadurch ein Signal an dem dafür vorgesehenen Überwachungsgerät erscheint bzw. von diesem abgegeben wird.

Entsprechend verhält es sich, wenn an der Rohrleitungswandung ein äußerer Riß 15 entsteht, der von der Rohraußenseite bis an die elektrisch leitende Schicht 4.1 reicht, so daß durch diesen Riß 15 Wasser aus der Umgebung ebenfalls bis an die elektrisch leitende Schicht 4.1 vordringen kann und dadurch den vorher zwischen dieser elektrisch leitenden Schicht 4.1 und der im Erdreich 1 verlegten Erdungsschiene 9 vorhandenen elektrischen Widerstand verringert, wodurch wiederum ein Signal an dem Überwachungsgerät ausgelöst wird.

Durch die stirnseitige Isolierung der elektrisch leitenden Schicht 4.1 an den einzelnen Rohrschüssen oder Abschnitten 3 der Rohrleitung 2 können Undichtigkeiten an den einzelnen Rohrschüssen oder Abschnitten 3 durch entsprechenden Abgriff der zu dem Überwachungsgerät führenden elektrischen Kabel 5.1 in einfacher Weise jeweils genau geortet werden. Falls eine Besichtigung des Rohrinnenbereiches möglich ist, kann auch durch Inaugenscheinnahme die undichte Stelle genau festgestellt und anschließend durch Ausschweißen mit einem leitenden Kunststoff im Bereich der leitenden Schicht 4.1 sowie durch Ausschweißen mit einem nichtleitenden Kunststoff an der übrigen Rohrwandung repariert werden, so daß alle Schichten wieder durchgängig vorhanden sind, ohne daß die Leckage-Kontrolle unterbrochen wird.

Nach Abschluß dieser Arbeiten kann durch Widerstandsmessung festgestellt werden, ob dieser Riß 14 nunmehr dicht ist, oder ob er sich zur Rohraußenseite hin fortsetzt.

Beim Vorliegen einer solchen Situation kann durch geeignete Maßnahmen, wie Freilegen und Verschweißen, dieser außenliegende Riß 15 in der oben beschriebenen Weise ebenfalls dauerhaft dicht verschweißt werden. Gleiches gilt für die Feststellung und die Reparatur von Undichtigkeiten im Bereich der Schweißverbindungen 16 (Fig. 3 bis 6) zwischen den einzelnen Rohrschüssen 3. Auch hier kann eine elektrische Widerstandsmessung erfolgen, um beim Abfallen des elektrischen Widerstandes infolge von Rißbildung die geeigneten Maßnahmen zur Beseitigung der Undichtigkeiten zu treffen.

Die elektrisch leitende Schicht aus Kunststoff kann auch bei den zugehörigen Formteilen und Bauwerken, wie Schächte, Stauräume, Sickerwassersammler und dergleichen, in gleicher Weise zur Dichtheitskontrolle mittels geeigneter elektrischer Überwachungsgeräte eingesetzt werden.

### Liste der Bezugszeichen

- 1: Erdreich
- 2: Rohrleitung
- 3: Rohrschüsse
- 4.1: Schicht, elektrisch leitend
- 4.2: Schicht, elektrisch leitend
- 4.3: Schicht, elektrisch leitend
- 5.1: Kabel
- 5.1: Kabel
- 5.1: Kabel
- 6: Kabelrohr
- 7: Anschlußstutzen
- 8: Widerstandsmeßgerät
- 9: Erdungsschiene
- 10: Platte
- 11: Kabelanschluß
- 12: Isolierschicht
- 13: Abwasser
- 14: Riß
- 15: Riß
- 16: Schweißverbindungen

## Patentansprüche

1. Vorrichtung zum Überwachen der Dichtheit von im Freien und im Erdreich verlegten Rohren, Rohrleitungen und Bauwerken aus thermoplastischem Kunststoff, wie Transportleitungen, Kanalisationsleitungen, Abwasserleitungen mit zugehörigen Formteilen, Schächten, Stauräumen, Sickerwassersammlern und dergleichen, bei der die Wandung mit mindestens einer sich über den gesamten Umfang und Länge erstreckenden homogenen elektrisch leitenden Schicht umgeben ist, wobei die elektrisch leitende Schicht über Kabel mit einem Pol eines hochohmigen Widerstandsmeßgerätes verbunden ist, dessen anderer Pol an eine sich zu der elektrisch leitenden Schicht parallel erstreckende Gegenelektrode angeschlossen ist, **dadurch gekennzeichnet**, daß die erste leitende Schicht (4.1) als leitende Kunststoffschicht ausgebildet ist, wobei der Kunststoff der Schicht (4.1) die gleiche Beschaffenheit wie der Kunststoff des Rohres aufweist.

2. Vorrichtung nach Anspruch 1, **dadurch gekennzeichnet**, daß die Rohrleitungen (2) und Bauwerke in meherere, aneinander anschließende, elektrisch gegeneinander isolierte Abschnitte unterteilt sind, von denen jeder einzelne Abschnitt an das Widerstandsmeßgerät (8) angeschlossen ist.

3. Vorrichtung nach Anspruch 1 oder 2, **dadurch gekennzeichnet**, daß das Widerstandsmeßgerät (8) als optisches oder akustisches Signalgerät ausgebildet ist.

4. Vorrichtung nach einem der Ansprüche 1 bis 3, **dadurch gekennzeichnet**, daß die elektrisch leitende Schicht (4.1) entweder an der Innenseite, an der Außenseite oder im Querschnittsbereich zwischen Innen- und Außenseite der Wandung der Rohrleitung (2) oder des Bauwerkes ausgebildet ist.

5. Vorrichtung nach einem der Ansprüche 1 bis 3, **dadurch gekennzeichnet**, daß die elektrisch leitende Schicht (4.1) an mindestens einem stirnseitigen Ende jedes Abschnittes der Rohrleitung (2) oder des Bauwerkes durch eine Isolierschicht (12) abgedeckt ist.

6. Vorrichtung nach einem der Ansprüche 1 bis 3, **dadurch gekennzeichnet**, daß als Gegenelektrode für die elektrisch leitende Schicht (4.1) eine Erdungsschiene (9) in einem geringen Abstand parallel zu der Rohrleitung (2) oder dem Bauwerk im Erdreich angeordnet ist.

7. Vorrichtung nach einem der Ansprüche 1 bis 3, **dadurch gekennzeichnet**, daß an der Wandung der Rohrleitung (2) oder des Bauwerkes parallel zu der damit homogen ausgebildeten elektrisch leitenden Schicht (4.1), jedoch gegenüber dieser durch eine Zwischenschicht aus thermoplastischem Kunststoff elektrisch isoliert, wenigstens eine weitere elektrisch leitende Schicht (4.2, 4.3) als Gegenelektrode ausgebildet ist.

## Claims

1. A device for monitoring the fluid-tightness of open-air or buried pipes and structures made of thermoplastic material, e.g. feed pipes, drainpipes or waste-water pipes with associated moulded parts, manholes, storage chambers, seepage water collectors and the like, the wall of the device being surrounded by at least one homogeneous electrically conductive layer extending around the entire periphery and length, and the electrically conductive layer being connected by cables to one terminal of a high-resistance ohmmeter, the other terminal of which is connected to a counter-electrode extending parallel to the electrically conductive layer, characterised in that the first conductive layer (4.1) is a conductive plastics layer, the plastics in the layer (4.1) being of the same nature as the plastics in the pipe.

2. A device according to claim 1, characterised in that the pipes (2) and structures are divided into a number of adjacent portions electrically insulated from one another, each individual portion being connected to the ohmmeter (8).

3. A device according to claim 1 or 2, characterised in that the ohmmeter (8) is an optical or acoustic signalling device.

4. A device according to any of claims 1 to 3, characterised in that the electrically conductive layer (4.1) is formed either on the inside or on the outside or in the cross-sectional region between the inside and outside of the wall of the pipe (2) or structure.

5. A device according to any of claims 1 to 3, characterised in that the electrically conductive layer (4.1) is covered by an insulating layer (12) at at least one end of each portion of the pipe (2) or structure.

6. A device according to any of claims 1 to 3, characterised in that the counter-electrode for the electrically conductive layer (4.1) is an earthing busbar (9) disposed in the ground at a short distance from and parallel to the pipe (2) or structure.

7. A device according to any of claims 1 to 3, characterised in that a counter-electrode in the form of at least one additional electrically conductive layer (4.2, 4.3) is formed on the wall of the pipe (2) or structure parallel to the similarly-constructed electrically conductive layer (4.1) but electrically insulated therefrom by an intermediate layer of thermoplastic.

## Revendications

1. Dispositif pour surveiller l'étanchéité de tuyaux, installés à l'air libre et à même la terre, de tuyauteries et d'ouvrages, en matière plastique thermoplastique, tels que des conduites de transport, des conduites d'égouts, des conduites d'eaux usées avec les pièces moulées nécessaires, puits, des réservoirs de retenue, collecteurs d'eau d'infiltration et analogues correspondants, dans lequel la paroi est entourée d'au moins une couche homogène conductrice de l'électricité, s'étendant sur tout le périmètre et la longueur, la couche conductrice de l'électricité étant reliée, au moyen d'un câble, au pôle d'un appareil de mesure de résistance fortement ohmique, dont l'autre pôle est raccordé à une contre-électrode s'étendant parallèlement à la couche conductrice de l'électricité, caractérisé en ce que la première couche conductrice (4.1) est une couche conductrice en matière plastique, la matière plastique de la couche (4.1) présentant la même structure que la matière plastique du tuyau

2. Dispositif selon la revendication 1, caractérisé en ce que les tuyauteries (2) et les ouvrages sont divisés en plusieurs tronçons isolés électriquement les uns des autres, subséquents l'un à l'autre, chaque tronçon individuel étant relié à l'appareil (8) mesurant la résistance.

3. Dispositif selon la revendication 1 ou 2, caractérisé en ce que l'appareil (8) mesurant la résistance est un appareil à signaux optiques ou acoustiques.

4. Dispositif selon l'une des revendications 1 à 3, caractérisé en ce que la couche conductrice de l'électricité (4.1) est réalisée, soit sur la face intérieure, soit sur la face extérieure ou sur la zone transversale se trouvant entre les faces intérieure et extérieure de la paroi de la tuyauterie (2) ou de l'ouvrage.

5. Dispositif selon l'une des revendications 1 à 3, caractérisé en ce que la couche conductrice de l'électricité (4.1) est recouverte, à au moins une extrémité frontale de chaque tronçon de la tuyauterie (2) ou de l'ouvrage, d'une couche isolante (12).

6. Dispositif selon l'une des revendications 1 à 3, caractérisé en ce que, comme contre-électrode pour la couche conductrice de l'électricité (4.1), une barre de terre (9) est disposée, à même la terre, parallèle, à faible distance, à la tuyauterie (2) ou à l'ouvrage.

7. Dispositif selon l'une des revendications 1 à 3, caractérisé en ce que, sur la paroi de la tuyauterie (2) ou de l'ouvrage, parallèle à la couche conductrice de l'électricité (4.1) ainsi réalisée de manière homogène, mais isolée électriquement de celle-ci au moyen d'une couche isolante en matière plastique thermoplastique, au moins une couche conductrice de l'électricité subséquente (4.2, 4.3) est réalisée comme contre-électrode.
